# EUROPEAN PATENT APPLICATION

(11) **EP 1 109 091 A1**
(43) Date of publication of application: **20.06.2001**
(21) Application number: 99124937.6
(22) Date of filing: 14.12.1999
(51) Int. Cl.: G06F 3/033

(54) **Display of selectable objects using visual feedback**

(71) Applicant: SUN MICROSYSTEMS, INC., Palo Alto, California 94303 (US)
(72) Inventor: Weiss, Armin, 22765 Hamburg (DE)
(74) Representative: Betten & Resch

(57) **Abstract**

A plurality of objects comprising objects (10) which are selectable by a user for further manipulation and not-selectable objects (20) are displayed on a display screen (25). The selectable objects (10) are displayed in a first style and the not-selectable objects (20) are displayed in a second style. The user can thus easily recognise at any time which of the displayed objects are selectable for carrying out further operations.

## Description

### FIELD OF THE INVENTION

The present invention relates to the display of objects like graphical objects, text objects, etc. on a display screen. The present invention in particular relates to the display of objects on a display screen a part of which is selectable by a user for carrying out further operations.

### DESCRIPTION OF THE RELATED ART

With computer programs for producing graphics documents, presentation documents, HTML documents and the like it is known to employ a function for tying together single objects into groups, which can only be manipulated as a whole. If the creator e.g. of a graphics document wishes to have a plurality of identical objects each consisting of many elements in his or her image, it is possible to create one of the identical objects first, make copies of these to produce multiple objects, then group them together into a single group object which then can only be manipulated as a group. This group can be moved to another position, copied, pasted and duplicated without the risk of unintentionally changing or removing elements of the grouped object. The creation of documents containing a plurality of identical objects is thus greatly facilitated by this grouping function. It is also known to provide a possibility of forming groups of groups that is to tie together a plurality of groups of objects to a new group of a higher hierarchy level.

When creating e.g. a graphics document or an HTML document having a large number of objects put together into groups and subgroups there arises the problem that it is difficult for the user sitting in front of the computer screen to find out which object belongs to which group or subgroup and which objects are currently selectable for further manipulation and which are not. With prior art computer must first select an object by pressing a key or clicking a mouse button at a particular cursor position in order to find out on which objects he or she actually can work on. The selected objects are then displayed using visual feedback, e.g. having a frame consisting of small rectangles for dragging the object. Alternatively upon selection of an object a window is opened displaying the selected object or group.

It is therefore an object of the present invention to solve the above mentioned problems and in particular to provide the possibility to recognise the selectable objects on the computer screen using visual feedback at a first glance before actually selecting the same.

### SUMMARY OF THE INVENTION

The present invention provides a method for generating information signals for displaying a plurality of objects on a display screen including objects selectable by a user for carrying out further operations and not-selectable objects. The selectable objects are displayed in a first style and the not-selectable objects are displayed in a second style.

With the invention selectable objects can be distinguished on the screen display from not-selectable ones without selecting or entering one of the displayed objects. The user thus knows which object or group he can manipulate before he actually selects one. So the creation of documents, in particular large and complex documents having a structure of several levels of grouped objects is facilitated.

Preferably the selectable objects depend on the position of a pointing element movable on the display screen by means of a pointing device. The style of the selectable objects at any given point of time then also varies together with the screen position of the pointing element. The selectable objects are then easily identifiable on the whole display screen by simple movement of the pointing element through the pointing device.

Preferably the selectable objects are highlighted with respect to the not-selectable ones. Dependent on the application of the present invention, however, it is also possible to highlight the not-selectable objects.

The not-selectable objects may be displayed semitransparent or "ghosted", whereby the amount of transparency of the displayed not-selectable objects can vary between 20% and 80%, preferably between 40% and 60%. The not-selectable objects may also be displayed with reduced or increased brightness or light intensity.

Alternatively or additionally the not-selectable objects may be displayed in a different colour, hatched, or with thinner or broken lines.

If a number of objects form a group of objects which is only selectable as a whole, then the whole group is displayed in the first style. Furthermore, if such a group of objects is broken up into a plurality of elements or subgroups, the elements or subgroups then selectable are displayed in the first style.

According to a further implementation the present invention provides a computer program for generating signals for displaying a plurality of objects on the display screen only a part of which are at a given time selectable by the user. The selectable objects are displayed in a first style and the not-selectable objects in a second, different style.

According to a still further implementation the present invention provides a computer program product for displaying a plurality of objects on a display screen including objects selectable by a user and objects not-selectable by a user. The selectable objects are displayed in a first manner and the not-selectable objects in second, different manner.

Application code may be embodied in any form of computer program product. A computer program producrt comprises a medium configured to store or transport computer readable code, or in which computer readable code may be embedded. Some examples of computer program products are CD-ROM disks, ROM cards, floppy disks, magnetic tapes, computer hard drives, servers on a network, and information signals with or without employing a carrier wave.

According to a still further implementation the present invention provides an apparatus for displaying a plurality of objects on a display screen including objects selectable by a user for carrying out further operations and not-selectable objects, the apparatus comprising a processing unit for generating signals to display the selectable objects in a first style and the not-selectable in a second style.

According to a still further implementation the present invention provides a data signal for generating on a display screen a display image comprising objects selectable by a user for carrying out further operations and not-selectable objects, the signal being adapted to display the selectable objects in a first style and the not-selectable objects in a second style.

The great advantage and utility of the present invention is that selectable and not-selectable objects displayed on a display screen can easily be distinguished. The work for creating or editing a document having, in a predetermined state, selectable and not-selectable objects is greatly facilitated. The invention is particularly advantageous if the selectable objects are spread across the display screen and would hardly be detectable without visual feedback.

### BRIEF DESCRIPTION OF THE DRAWINGS

Figure 1 is a schematic illustration of an image displayed on a display screen according to a first embodiment of the present invention.

Figure 2 is a schematic illustration of an image displayed on a display screen according to a second embodiment of the present invention.

Figure 3 is a schematic illustration of an image displayed on a display screen according to a third embodiment of the present invention.

Figure 4 is a schematic illustration of an image displayed on a display screen according to the third embodiment of the present invention, whereby a cursor has been moved to a different position.

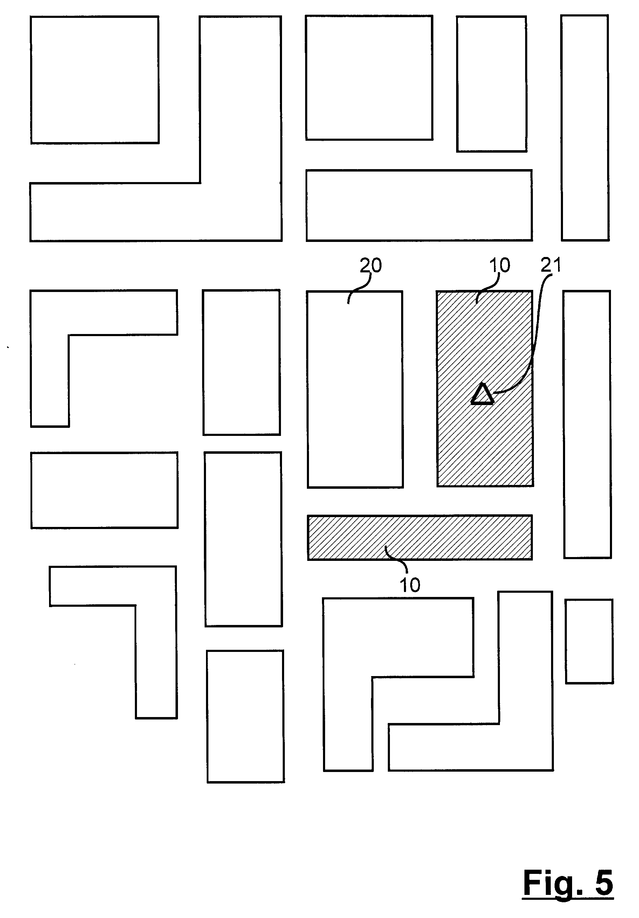

Figure 5 is a schematic illustration of an image displayed on a display screen according to the third embodiment of the present invention whereby a group of objects has been broken up into a subgroup.

Figure 6 is a flowchart illustrating the method according to the present invention.

Figure 7 is a schematic illustration of a computer system to which the present invention may be applied.

Figure 8 is a schematic illustration of a client-server configuration to which the present invention may be applied.

### DETAILED DESCRIPTION OF PREFERRED EMBODIMENTS

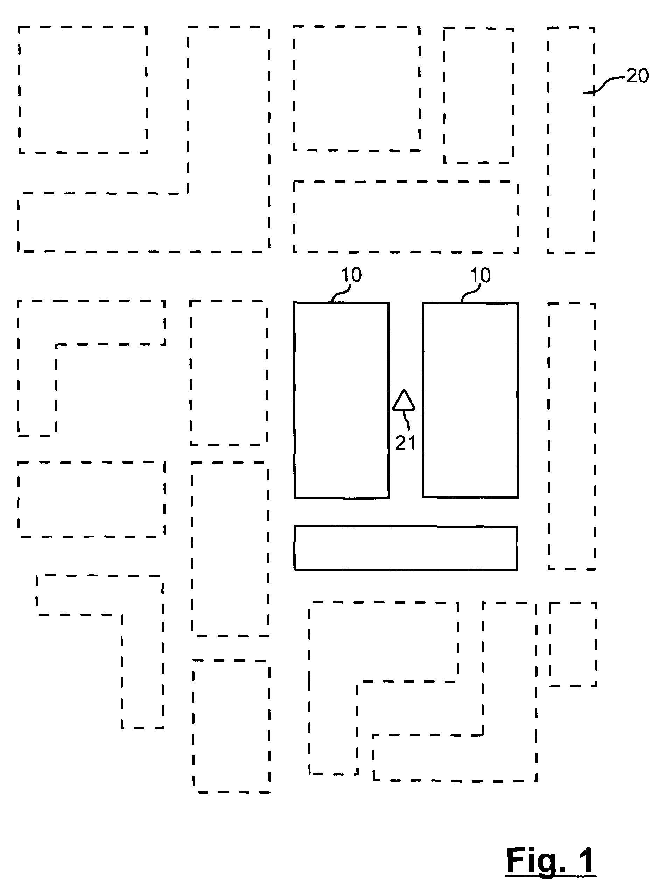

Figure 1 illustrates schematically an image displayed on a display screen according to a first embodiment of the present invention. Figure 1 shows as an example an arbitrary two-dimensional pattern. The invention is of course not restricted to this or any other particular type of objects to be displayed on a display screen. The invention can be applied to any type of objects including 2D- or 3D-graphics objects, text objects, bit maps, elements of an HTML or XML document, etc., which can be displayed on a display screen and may be selectable by the user for further editing or manipulation.

The displayed image depicted in Figure 1 consists of two types of objects, selectable objects 10 and not-selectable objects 20. When the user gives a predetermined instruction to select or enter an object, for example by mouse click, pressing a key or giving a speech command, the selected object(s) can be edited. It can for example, be moved to another position, filled with colour, amended, copied or deleted in any desired manner.

In the example illustrated in Figure 1 the screen cursor 21 points to a selectable group consisting of three objects or elements 10. The objects 10 of this group, which are selectable by the user are displayed in solid lines whereas all the other objects 20, which are not-selectable by the user are displayed in broken lines.

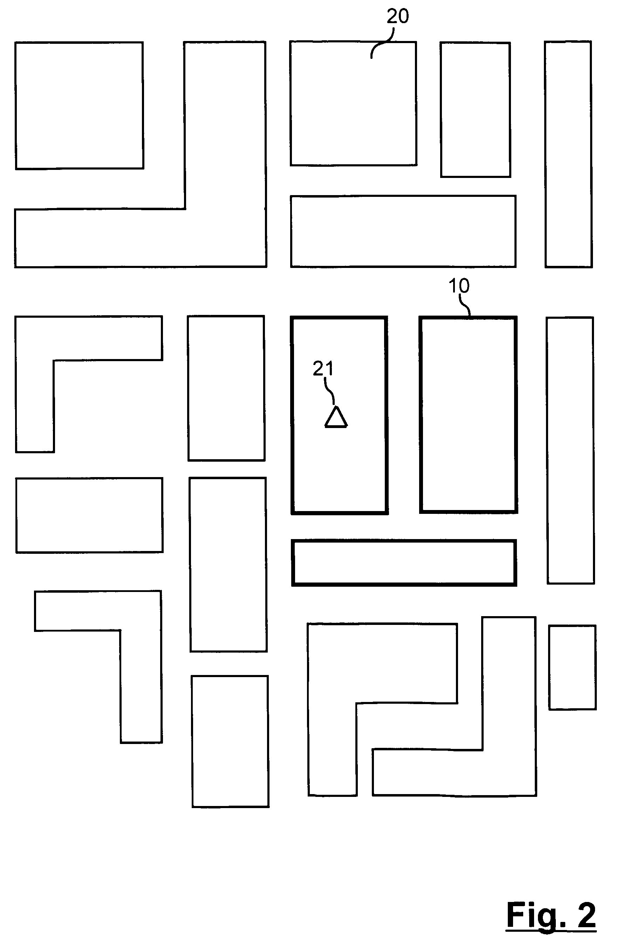

It should be acknowledged that any desired style can be used to display the selectable objects on the one hand and the not-selectable objects on the other hand as long as these two types of objects are distinguishable. In the second embodiment shown in Figure 2 the selectable objects are displayed in fat lines whereas the not-selectable objects 20 are displayed in thin lines.

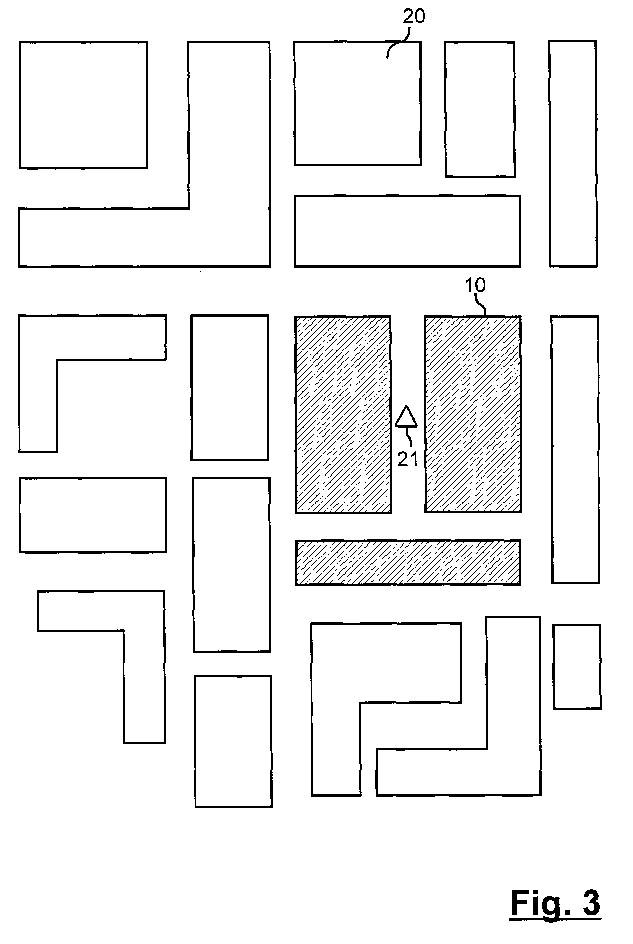

In the third embodiment illustrated in Figure 3 the selectable objects 10 are displayed as hatched objects. This style is particularly useful when closed objects are to be displayed.

A further preferred possibility (not shown in the drawings) is to display the not-selectable objects with reduced or increased brightness ("dimmed") or semitransparent ("ghosted"). The grade of transparency or brightness may vary according to the type of objects or the luminosity of the display screen; however, a transparency or brightness of between 20% and 80% and in particular between 40% and 60% is preferred. To display the not-selectable objects 20 semitransparent or "ghosted" is particularly advantageous if a complex document or page including e.g. three dimensional graphics is displayed. The user can then easily recognise the selectable objects even in a complex three dimensional picture.

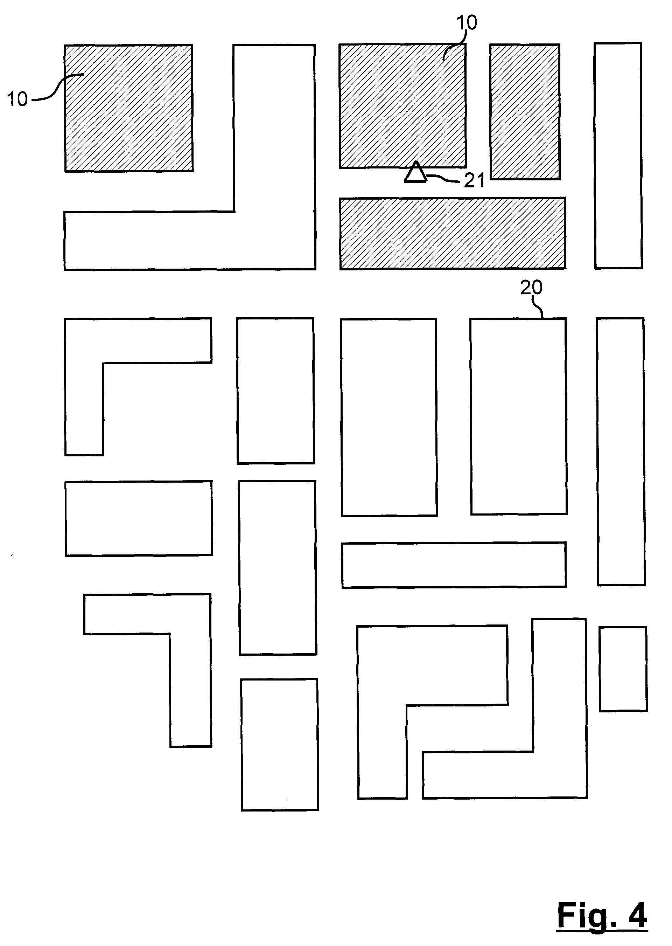

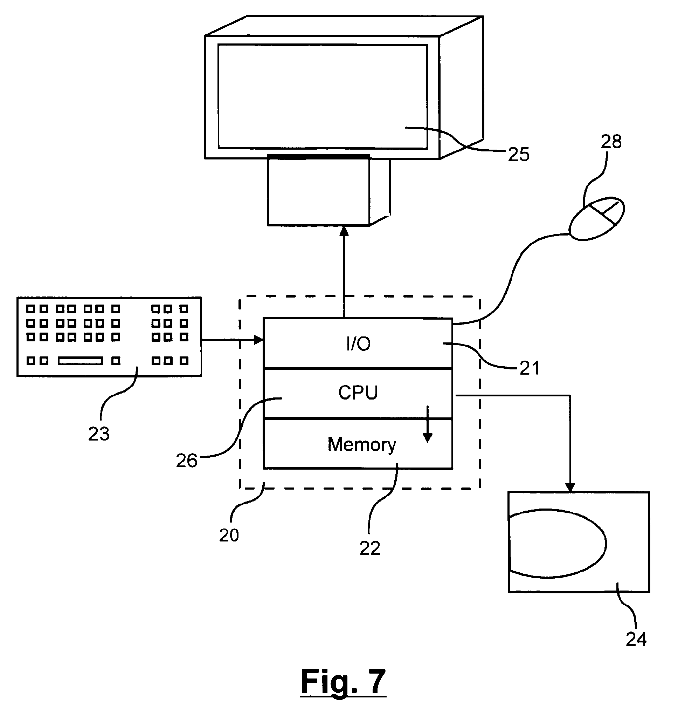

Figure 4 illustrates the same objects shown in Figure 3, however, the cursor 21 has been moved further upwards on the display screen. To move the cursor any appropriate device as a mouse 28, touch screen or keys 23 may be employed (see Fig. 7). The cursor 21 in Figure 4 points to a different group of objects which are now highlighted with respect to the non-selectable objects 20. As the user moves the cursor on the display screen the currently selectable objects or groups are always displayed with visual feedback distinguishable from the rest of the displayed image following the movement of the cursor. So, the user can easily get an overview of the selectable objects of the whole image. This is particularly advantageous in the example shown in Figure 4, where the objects of the group are not positioned close to each other but are spread across the screen.

If a plurality of objects are tied together to form a group of objects, moving the cursor over any object of the group causes all obejcts of the group to be highlighted using a method such as shown in one or more of Figures 1 to 4 to distinguish them from objects not belonging to a group. If the user then selects or enters the group by a predetermined instruction, for example double clicking the mouse button thereby breaking up the group into its constituents that object or subgroup of objects which is then selectable by the user (dependent on the current cursor position) is displayed in highlighted form. The user can thus "click through" the hierarchy of groups and subgroups and can always immediately recognise which objects form a group on every level of the group hierarchy and which are selectable. When the user inputs the respective instruction for grouping together a number of objects or subgroups then the newly formed group is highlighted on the display screen. The user is thus always immediately aware of the level within the group hierarchy in which he or she is currently working. The creation and editing of such documents including selectable and non-selectable objects is thus greatly facilitated.

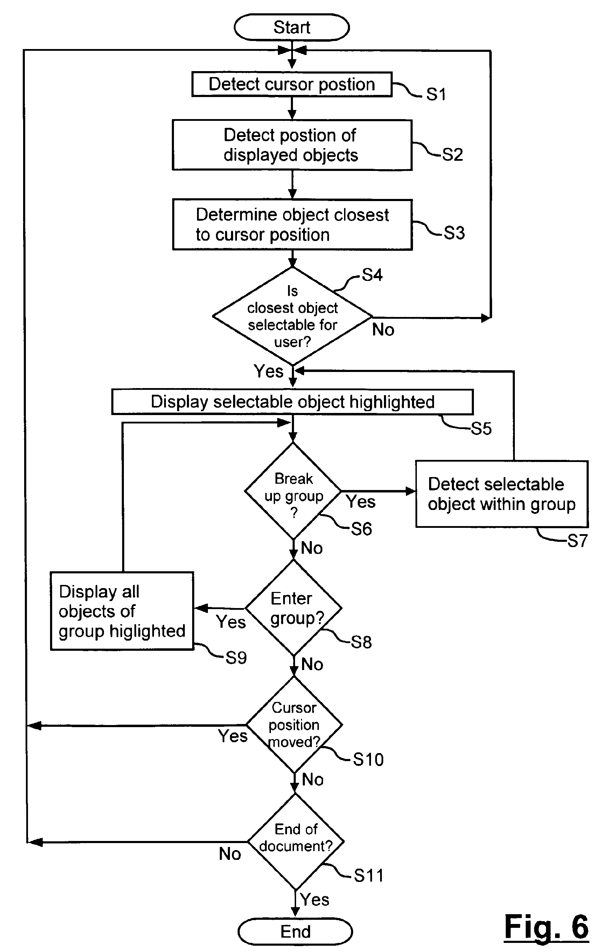

Figure 6 shows a flow chart illustrating the method steps of a preferred embodiment of the current invention. First the cursor position and the position of all objects displayed on the screen are detected, compared and the object closest to the cursor position is determined (steps S1 to S3). In step S4 it is determined whether or not the closest object of step S3 is selectable for the user. If this is the case this object is displayed highlighted. Further the method then proceeds to step S6, in which a user instruction is awaited to enter a group if the highlighted object is part of a group. If the group is broken up in step S7 the selectable object or subgroup within the group is displayed highlighted. Similarly, in step S8 a user instruction to enter the group is awaited. If the user chooses to enter a highlighted group all objects of this group are displayed and the method proceeds to step S6. If none of the mentioned instructions is given it is determined whether or not the cursor position has been moved. If this is the case the method goes back to step S1. Otherwise the end of the document is checked and the display method according to the invention is finished.

The present invention is applicable to a hardware configuration like a personal computer or work station as illustrated schematically in Figure 7. The computer may comprise a central processing unit CPU 26, an input output I/O unit 21, an internal memory 22 and an external memory 24. The computer further comprises standard input devices like a keyboard 23, a mouse 28 or speech processing means (not illustrated).

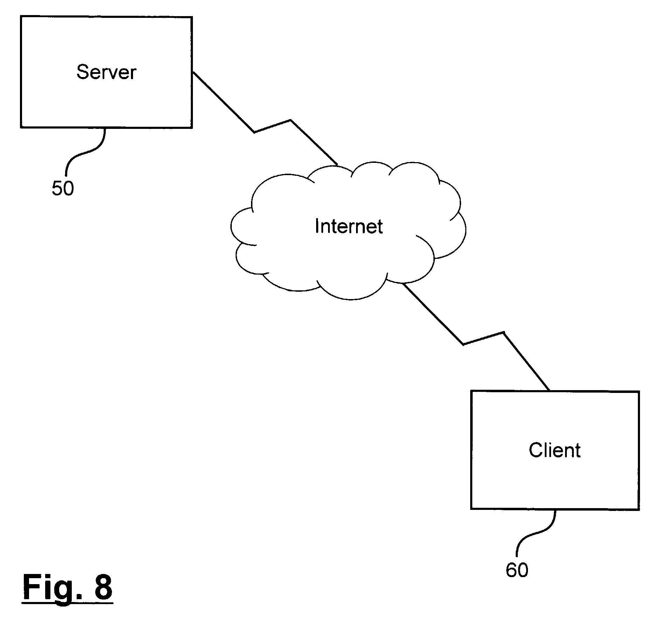

The invention, however, may also be applied to a client-server configuration as illustrated in Figure 8. The obejcts may be displayed on a display screen of a client device 60 while some or all steps of the method as illustrated before in Figures 1 to 4 are carried out on a server computer 50 accessible by the client device 60 over a data network as the internet using a browser application or the like.

While the invention has been particularly shown and described with reference to preferred embodiments thereof, it will be understood by those skilled in the art that various other changes in the form and details may be made therein without departing from the spirit and the scope of the invention.

## Claims

1. A method of generating an information signal for displaying a plurality of objects on a display screen (25) including objects selectable by a user for carrying out further operations and not-selectable objects, the method comprising providing signals for displaying the selectable objects (10) in a first style and the not-selectable objects (20) in a second style.

2. The method of claim 1, wherein a pointing element (21) is movable on the display screen by means of a pointing device (28) and the selectable objects (10) displayed in the first style depend on the present position of the pointing element (21) on the display screen (25).

3. The method of claim 1, wherein the selectable objects (10) are highlighted with respect to the not-selectable objects (20).

4. The method of claim 3, wherein the not-selectable objects (20) are displayed semitransparent or with reduced or increased brightness.

5. The method of claim 4, wherein the amount of transparency or brightness of the displayed not-selectable objects (20) is between 20% and 80%, preferably between 40% and 60% compared with the selectable objects (10).

6. The method of claim 3 wherein the not-selectable objects (20) are displayed with thinner or broken lines.

7. The method of claim 1 wherein, if a number of objects form a group of objects and if the objects of the group are only selectable as a whole then all objects of the group are displayed in the first style.

8. The method of claim 7 wherein, if the group of objects is broken up into a plurality of elements or subgroups, the elements or subgroups then selectable by the user are displayed in the first style.

9. A computer program comprising program code adapted for providing signals for displaying a plurality of objects on a display screen including objects (10) selectable by a user for carrying out further operations and not-selectable objects (20), the method comprising providing signals for displaying the selectable objects (10) in a first style and the not-selectable objects (20) in a second style.

10. The computer program of claim 9, wherein a pointing element (21) is movable on the display screen by means of a pointing device and the selectable objects (10) displayed in the first style depend on the present position of the pointing element (21) on the display screen.

11. The computer program of claim 9, wherein the selectable objects (10) are highlighted with respect to the not-selectable objects (20).

12. The computer program of claim 11, wherein the not-selectable objects (20) are displayed semitransparent or with reduced or increased brightness.

13. The computer program of claim 12, wherein the amount of transparency or brightness of the displayed not-selectable objects (20) is between 20% and 80%, preferably between 40% and 60% compared with the selectable objects (10).

14. The computer program of claim 11 wherein the not-selectable objects (20) are displayed with thinner or broken lines.

15. The computer program of claim 9 wherein, if a number of objects forms a group of objects and if the objects of the group are only selectable as a whole, then all objects of the group are displayed in the first style.

16. The computer program of claim 15 wherein, if the group of objects is broken up into a plurality of elements or subgroups, the elements or subgroups then selectable by the user are displayed in the first style.

17. A computer program product comprising program code adapted for providing a singal for displaying a plurality of objects on a display screen including objects (10) selectable by a user for carrying out further operations and not-selectable objects (20), the method comprising providing signals for displaying the selectable objects (10) in a first style and the not-selectable objects (20) in a second style.

18. The computer program product of claim 17, wherein a pointing element (21) is movable on the display screen by means of a pointing device and the selectable objects (10) displayed in the first style depend on the present position of the pointing element (21) on the display screen.

19. The computer program product of claim 17 wherein the selectable objects (10) are highlighted with respect to the not-selectable objects (20).

20. The computer program product of claim 17, wherein, if a number of objects form a group of objects and if the objects of the group are only selectable as a whole, then all objects of the group are displayed in the first style.

21. The computer program product of claim 20 wherein, if a group of objects is broken up into a plurality of elements or subgroups, the elements or subgroups then selectable are displayed in the first style.

22. An apparatus for generating information signals for displaying a plurality of objects on a display screen (25) including objects selectable by a user for carrying out further operations and not-selectable objects, the apparatus comprising a processing unit (26) for generating signals to display the selectable objects (10) in a first style and the not-selectable objects (20) in a second style.

23. A data signal for generating on a display screen (25) a display image comprising objects selectable by a user for carrying out further operations and not-selectable objects, the signal being adapted to display the selectable objects (10) in a first style and the not-selectable objects (20) in a second style.
